# EUROPEAN PATENT SPECIFICATION

(11) **EP 1 293 118 B1**
(45) Date of publication and mention of the grant of the patent: **11.10.2006**
(21) Application number: 02078829.5
(22) Date of filing: 17.09.2002
(51) Int. Cl.: A01G 5/00, B07C 5/02

(54) **Flower dividing or supplying apparatus**
Verteilungs- oder Zuführeinrichtung für Blumen
Appareil pour écarter ou alimenter des fleurs

(30) Priority: 17.09.2001 NL 1018965
(43) Date of publication of application: 19.03.2003
(73) Proprietor: Altech Logistiek B.V., 2671 CT Naaldwijk (NL)
(72) Inventor: Verschoor, Cornelis Jacob, 2671 CT Naaldwijk (NL)
(74) Representative: Ferguson, Alexander

(56) References cited:
- EP-A- 0 930 002
- NL-C- 1 006 410

## Description

The invention relates to a flower dividing or supplying apparatus, particularly to a flower dividing apparatus for transferring single-stemmed flowers or plants supplied in collective wagons in measured or dosed quantities to a conveyor of a sorting machine.

Such dividing machines are known, but often are complex, take up a lot of space and/or are failure prone. It also often occurs that flowers get damaged. Furthermore the gearing of the several consecutive flower containing parts may be problem.

It is an object of the invention to provide a flower dividing apparatus that is compact.

It is a further object of the invention to provide a flower dividing apparatus that operates reliably.

Yet a further object of the invention is to provide a flower dividing apparatus which spares flowers as much as possible during the process.

A further object of the invention is to provide a flower dividing apparatus that is capable of operating at high speed.

A further object of the invention is to provide components for such a flower dividing apparatus.

According to the invention at least one of said objects is achieved with an apparatus for transferring singled flowers or plants from a collective container to a sorting machine, comprising means for serially picking up flowers kept closely together from the collective container, spreading means for separating the picked up flowers, means for transferring the separated flowers to a series of transfer conveyors substantially running in the same direction, which transfer conveyors are positioned for simultaneously transferring the series of flowers to a sorting conveyor, as well as comprising means for transferring the flowers from the respective conveyors to the sorting conveyor.

With such an apparatus several flowers can be simultaneously offered to the sorting conveyor, just as many flowers as are taken -per transverse series- from the collective container. The transfer conveyors transport the flowers parallel and separate from each other to the sorting conveyor, as a result of which the transfer is controllable and damage of the flowers is prevented.

The transfer conveyors are preferably positioned transverse to the sorting conveyor, so that the use of space remains limited.

Preferably the transfer conveyors are each provided with a flower holder that is rotatable on the transfer conveyor from an accommodation position, oriented towards the pick-up means, to a discharge position for discharging the flower to the transfer means, so that the flowers can easily be accommodated and discharged. The accommodation position and the discharge position preferably are at an angle of approximately 180 degrees to each other, as a result of which the flower holders are able to extend out of the transfer conveyors when accommodating and discharging and the reach is optimal.

In case of the angular displacement takes place at the location of the transfer means, said motion can be utilised for the transfer to the transfer means.

For stimulating the synchronous movement in the process it is preferred that the transfer conveyors are parallel.

The apparatus can furthermore be kept compact when the spreading means are active in a path parallel to the sorting conveyor. The apparatus will be particularly compact when the collective container is placed adjacent to the transfer conveyor.

Smooth transfer to the sorting conveyor is stimulated when the transfer means are arranged for movement along with the sorting conveyor, and preferably for simultaneous movement towards the sorting conveyor, as a result of which time is gained for the transfer and a smooth transfer is possible.

The transfer of the flowers is further ensured when the transfer means have a fork for accommodation of a flower stem, and are provided with means for closing or opening the accommodation space of the fork.

Preferably the sorting conveyor is provided with fork-shaped flower accommodation spaces that are moved according to a path, the transfer means furthermore being provided with carriers, for engaging and following the movement of the flower accommodation spaces during the transfer of the flowers. In this way a temporary connection takes place and optimal gearing between the transfer means and the moving accommodation spaces of the sorting conveyor can take place.

The carriers preferably are moveable between a position extending into the path of the flower accommodation spaces and a position free from it.

From another aspect it is preferred that the pick-up means are provided with closeable gripping arms that are moveable to and from the collective container, the flowers being kept in the collective container with their flowers supporting on a bearing surface, the gripping arms being moveable at a distance under the bearing surface into engagement with the stems, and the pick-up means furthermore being provided with means for lifting the flowers from the bearing surface. The flowers can thus be taken out of the holders without being damaged, and be held reliably during spreading.

The pick-up means can in a simple way each be provided with a cylinder for the reciprocal motion of the gripping arms to and from the collective container and/or to the transfer conveyors.

From a further aspect of the invention the spreading means comprise rigid connections that connect the pick-up means to each other and are extendable and retractable, the connections preferably being cylinder assemblies. In this way the mutual distance between the pick-up means can be controlled, from a pick-up position in which they lie closely together to a spread position for discharge to the transfer conveyors.

Spreading takes place in an optimally controlled manner when the cylinder assemblies connect consecutive pick-up means to each other.

When the adjacent pick-up means are guided on different rails for the spreading motion, the stability is increased.

The invention will be elucidated on the basis of an exemplary embodiment shown in the attached drawings, in which:
Figures 1A and 1B show a schematic top view and front view, respectively, of an exemplary embodiment of an apparatus according to the invention;
Figure 1C shows a side view of the apparatus of the figures 1A and 1B;
Figure 2 shows a schematic side view of an accommodation unit in the apparatus of the figures 1A-1C;
Figure 3A and 3B show a spreading device in the apparatus of the previous figures, in retracted position;
Figures 3C and 3D show the spreading device of figures 3A and 3B in spread position;
Figures 4A and 4B show a top view and a side view, respectively, of transferring the flowers from the spreading device to a conveyor;
Figures 5A-C show a top view, a front view and an end view, respectively of two situations of a transfer device for transferring flowers from the conveyor of figure 4 to a sorting conveyor; and

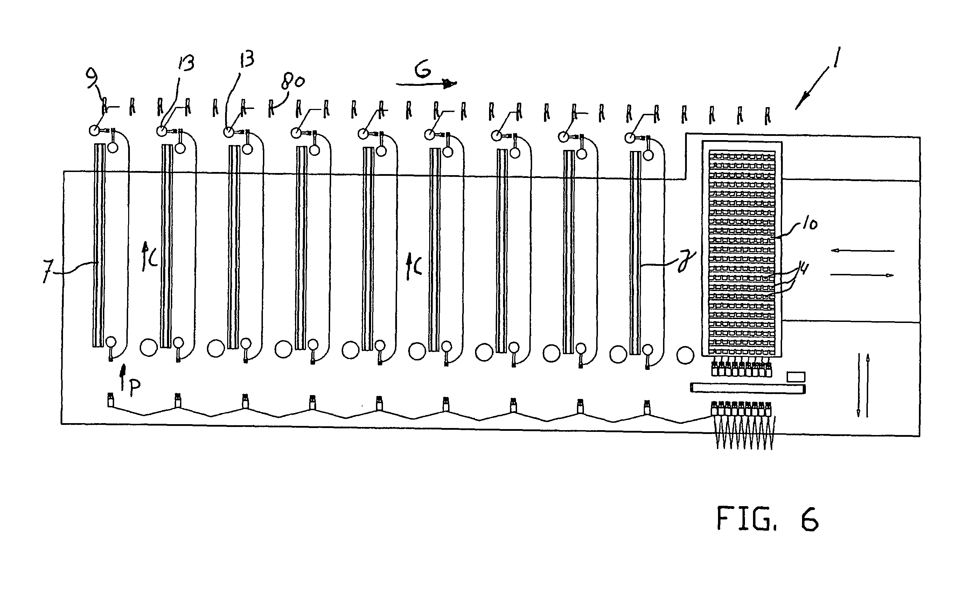

Figure 6 shows another alternative top view of a further exemplary embodiment of an apparatus according to the invention.

The apparatus 1 comprises an extensive frame 2, in which various components of the apparatus 1 are positioned. An accommodation space 3 is provided, in which a rolling container 10 is placed, in which a series of comb-shaped holders 14 having openings 15 for flowers are supported. Only one of the holders 14 is shown. Pick-ups or take-out units 6, that are moveable towards the holder 14 and retractable in the direction P, have been arranged on rails 5, to be transported in the direction B, while increasing the mutual distance of the pick-ups 6. There are just as many carriers 6 as there are openings 15.

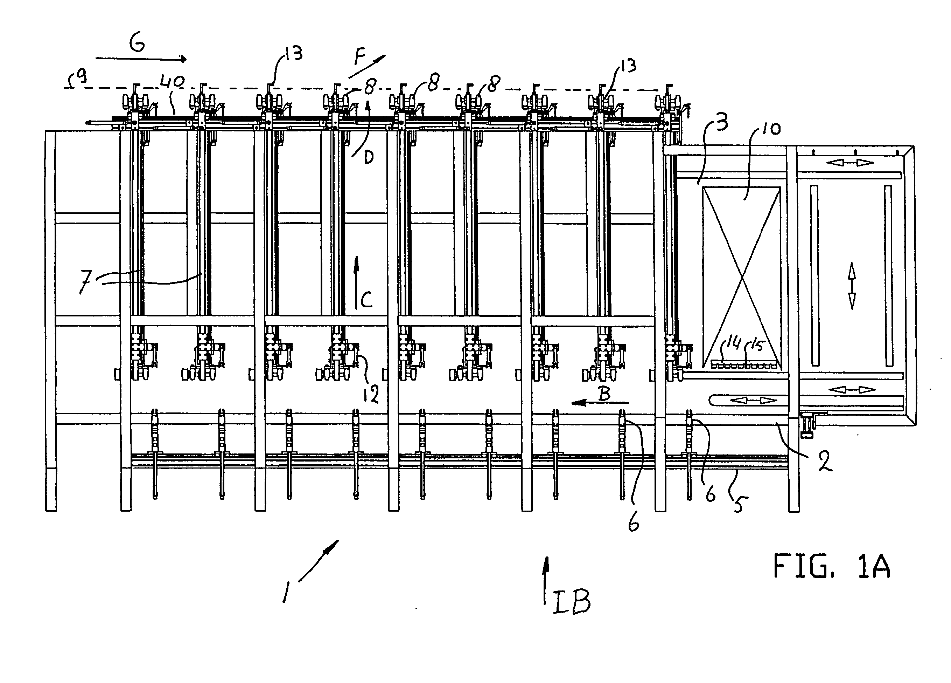

In the spread situation shown in figure 1A, the pick-ups can be further operated for movement in the direction P to discharge flowers to conveyors 7, that are positioned parallel and for transport in the direction C.

At the end of the series of conveyors 7 there is a transverse guide 40, on which transferrers 8 are moveable in the direction F, for transfer of the flowers to a conveyor 9 of a sorting machine, which transports the flowers further in the accommodation spaces in the direction G. The transfer unit 8 is furthermore provided with a bracket 13, which will be discussed further below.

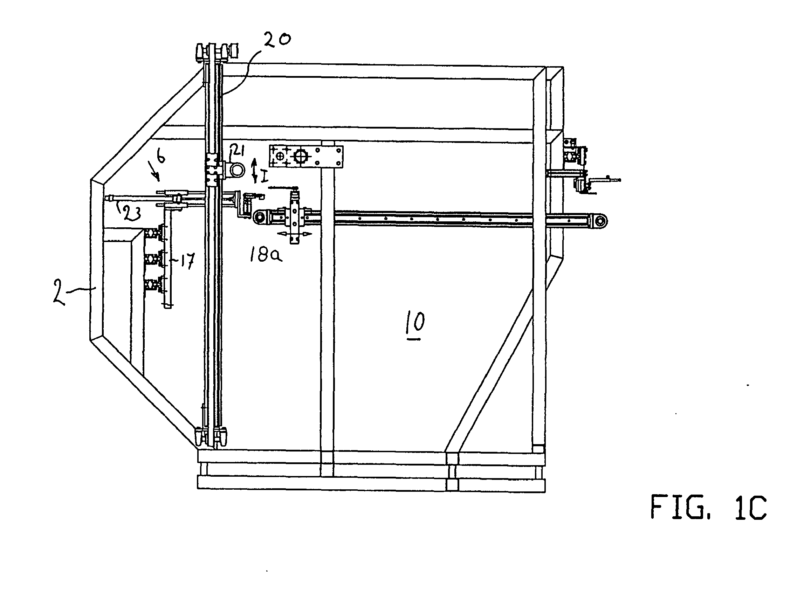

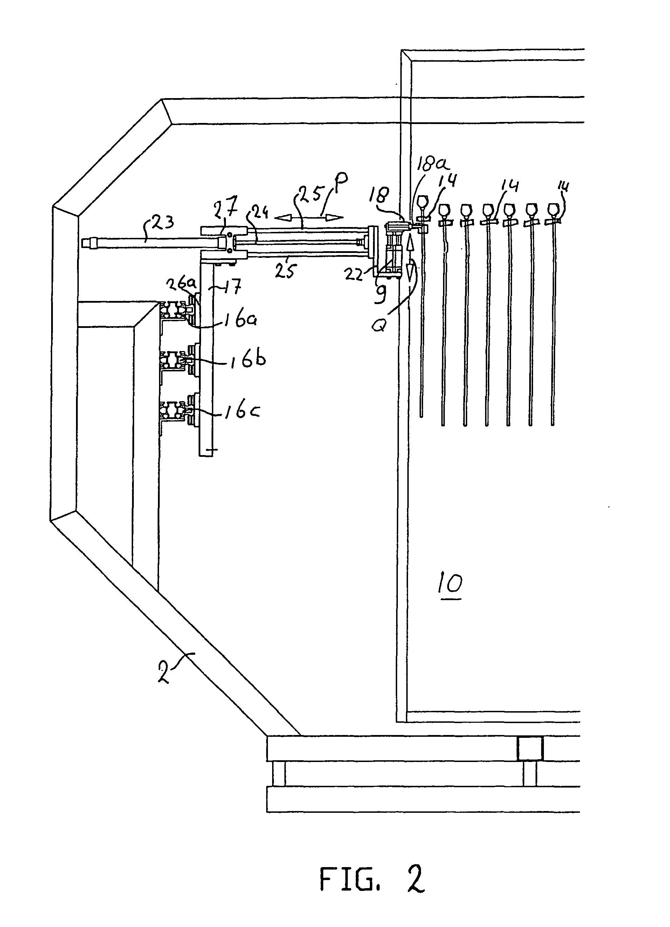

In the figures 1C and 2 it can be seen that the pick-ups 6 comprise a cylinder 23, in which at the end of the piston rod 24 a holder 22 has been attached, to which guiding pins 25 have been attached, that are bearing mounted in fixed guides 27. The holder 22 is provided with a lift cylinder 19, at the upper end of which a fork-shaped accommodation space 18 has been attached, which is oriented towards the flowers to be accommodated. The accommodation space 18 is defined by arms 18a that are moveable towards each other.

The possible motion in the direction P of the pick-ups 6 can be seen when comparing the figures 1C and 2 .

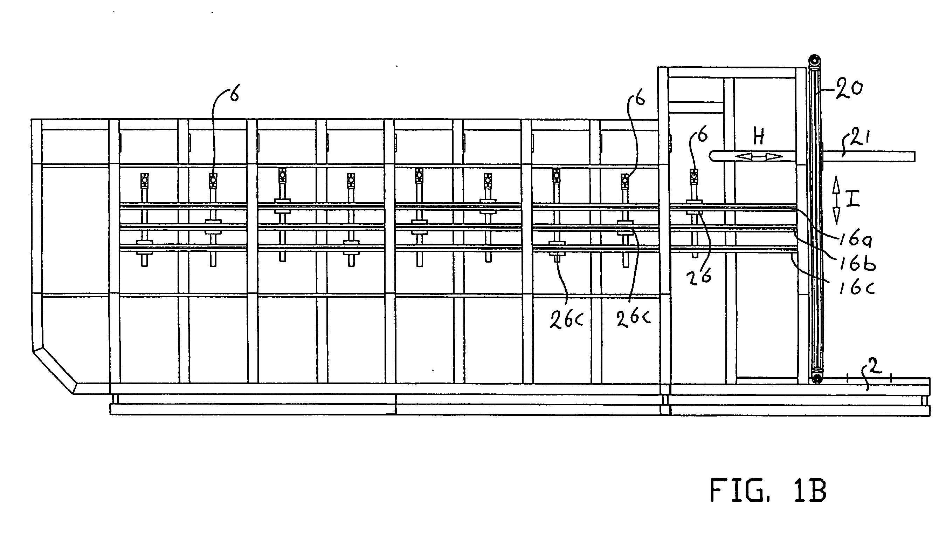

The pick-ups 6 have been arranged in a mobile manner in the direction B on the rails 16a via vertical rod 17 and carriage 26a. As can be seen in the figures 1B, 1C and 2, three rails 16a, 16b, 16c are placed one above the other, and each pick-up 6 is mobile on one of said rails 16a-c by means of carriage 26a, 26b, 26c. In figure 1B column 20 and transverse rod 21 can be seen which are moveable in the directions H and I.

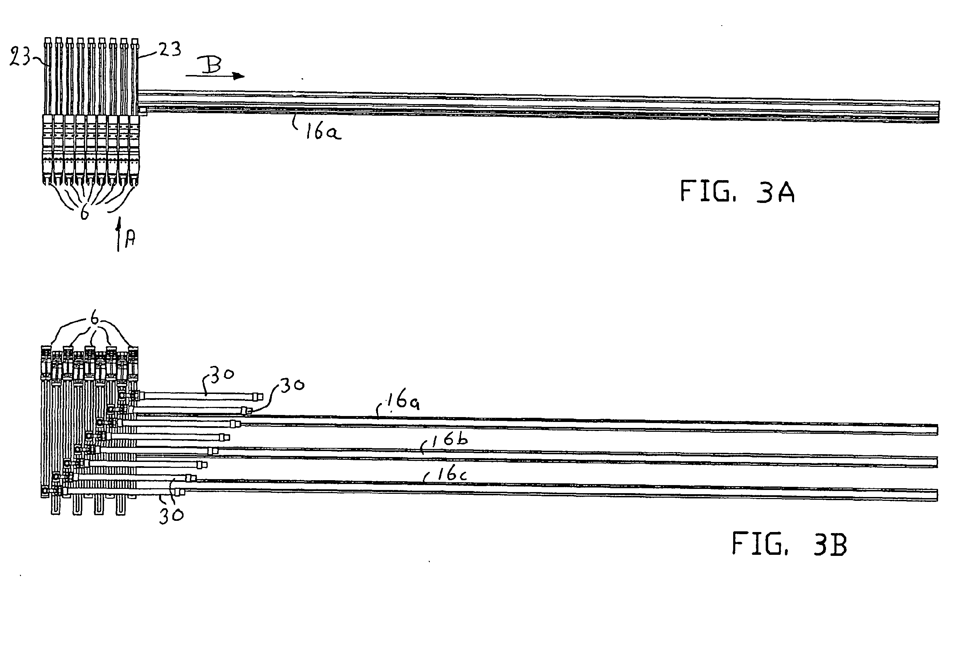

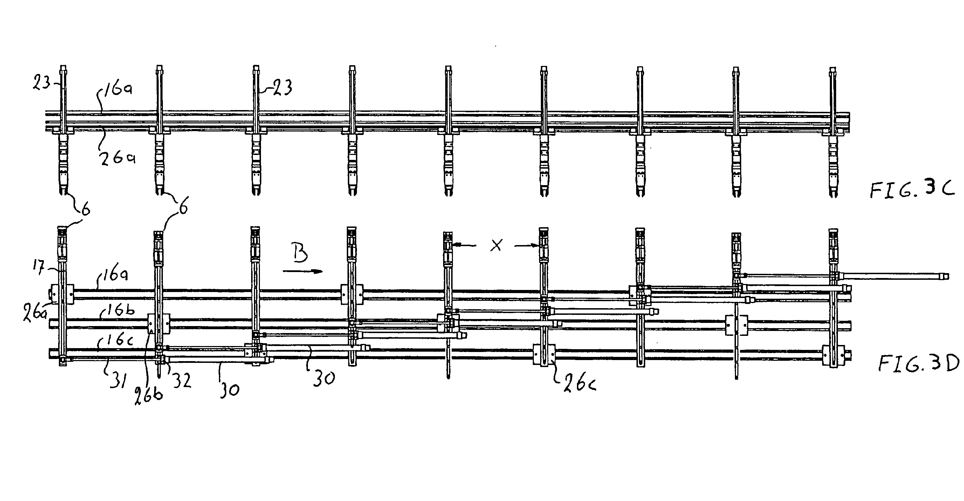

In the figures 3B-D it is indicated that the transfer units are connected to each other by means of cylinders 30. Here the cylinder itself is attached to the one pick-up 6, but the end of the piston rod 31 accompanying it is attached to the next pick-up 6. When exciting the cylinders 30 the pick-ups 6 are then automatically urged apart, to the outermost position shown in figures 3C and 3D. The mutual distance X, then is equal to the intermediate distance between the conveyors 7.

In the figures 3B and 3D it can furthermore be seen that the height of the pick-ups 6 alternatingly differs, in order to create room for the cylinders 30.

By means of the pick-ups 6, as is made visible in figure 2, the flowers are taken out of holder 14 in container 10. To that end the accommodator 18 is moved in the direction P up to a little underneath the holder 14, underneath its accommodation space 15, and is then operated to have the arms 18a embrace the stem, after which the cylinder 19 is operated to lift the accommodator 18 slightly in the direction Q, so that the flower bud is released well from the holder 14. Then the cylinder 23 can be operated for moving the accommodator 18 back into the direction P. Meanwhile the separating roller 21 is moved back in the direction H, above the path in the direction P of the accommodator 18. When moving back the accommodator 18 away from the holder 14 the separating roller 21 is moved downwards along the column 20 in the direction I, in order to ensure that the flowers engaged by the series of accommodators 18 of the pick-ups 6 are separated from the flowers that are situated in the next holder 14 in the container 10.

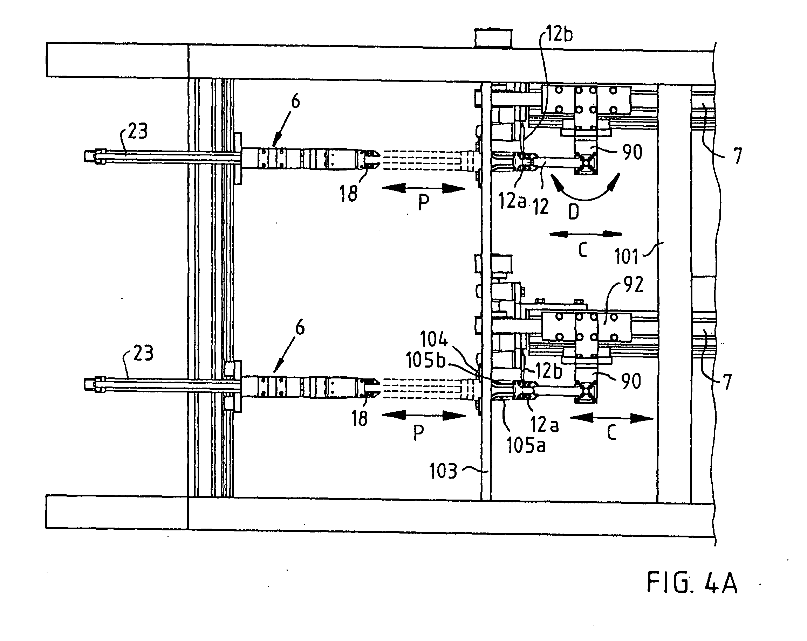

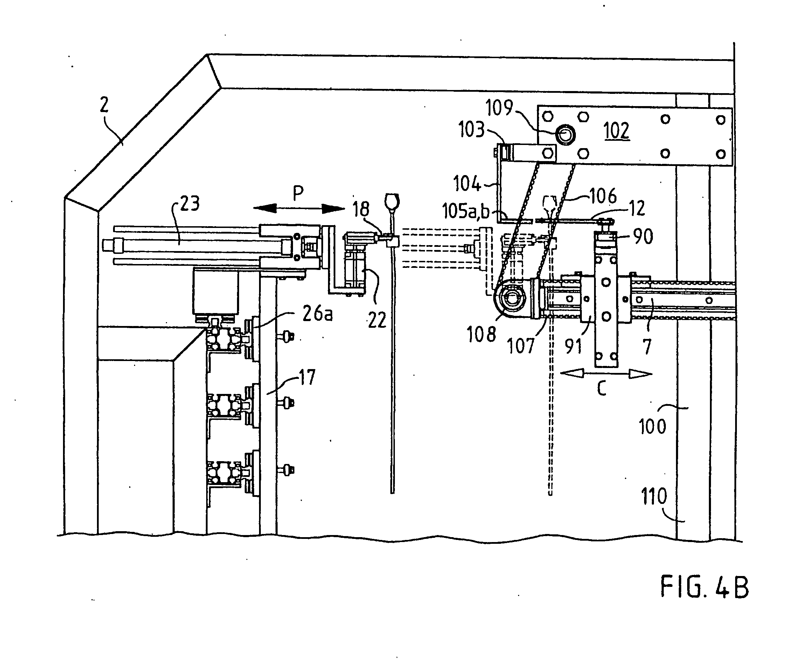

After spreading the pick-ups 6 (see figure 3D) the accommodators 18 are moved in the direction P, until they are near the transport forks 12 of the conveyors 7 (see figure 4). The transport forks 12 are provided with an accommodation space 12a, that is closeable with an operable closing cylinder 12b (see figures 4A and 4B).

In the figures 4A and 4B it can be seen that the pick-ups 6 move in the direction P in line with and towards the accommodations space 12a of the transport forks 12 that are kept still. The transport fork 12 is attached on carrier 90, which is moveable via supports 91 and 92 in the direction C along conveyor 7 and back. The conveyors 7 are attached to frame 100, which among others comprises posts 110 and girders 101. From the posts 100 an outrigger 102 extends (only shown in figure 4B), to which also a longitudinal girder 103 is attached, to which near each conveyor 7 a rod assembly 104 is attached in pending manner, which with horizontally turned legs 105a, 105b form a guiding access for the flower that is held by the accommodator 18. As can be seen in figure 4B the accommodators 18 move below along the guide legs 105a, 105b, in order to consecutively bring the flower in the accommodation space 12a of the transport fork 12.

To the outrigger 102 a motor is attached that is not further shown, having drive shaft 109 for driving a geared belt 106, with which drive wheel 108 is driven, in order to be able to drive the conveyor chain 107 of the conveyor 7 that circulates around it in two opposite directions.

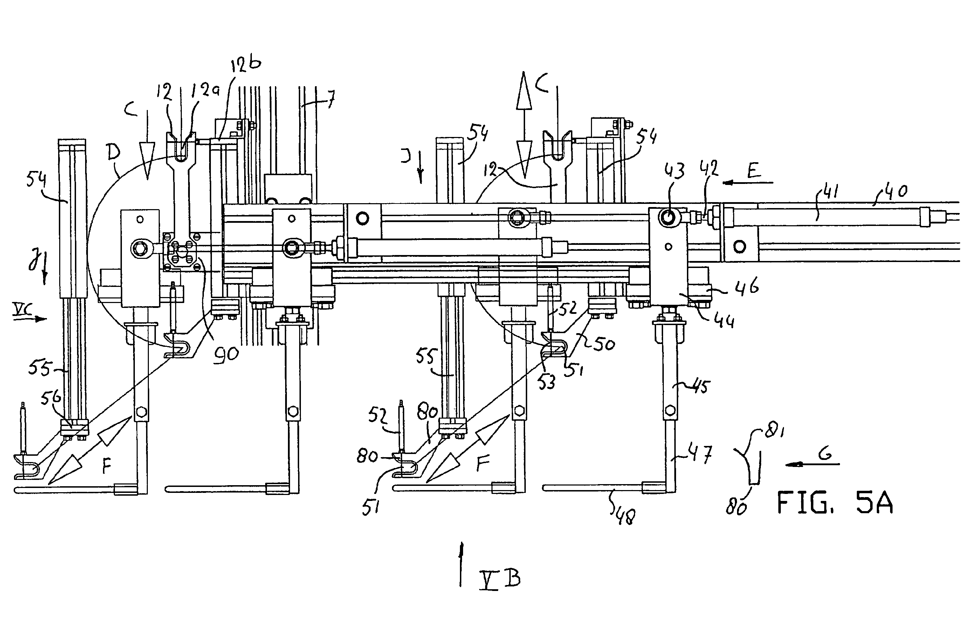

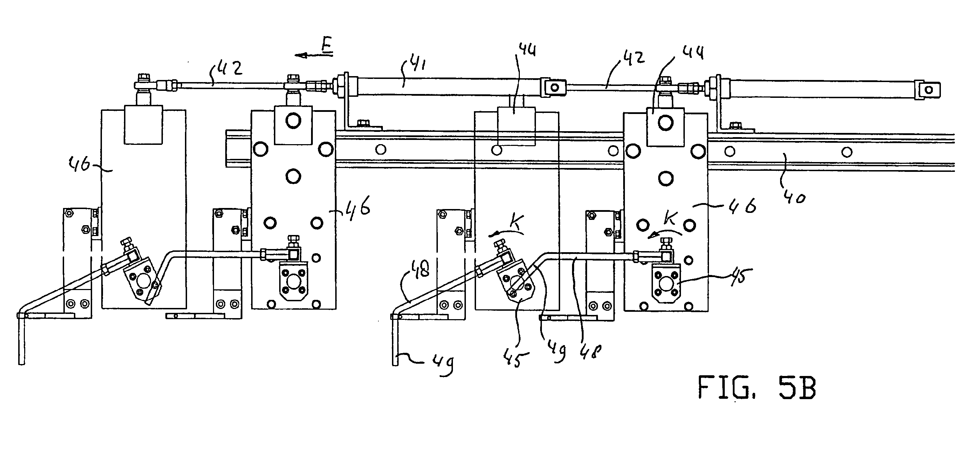

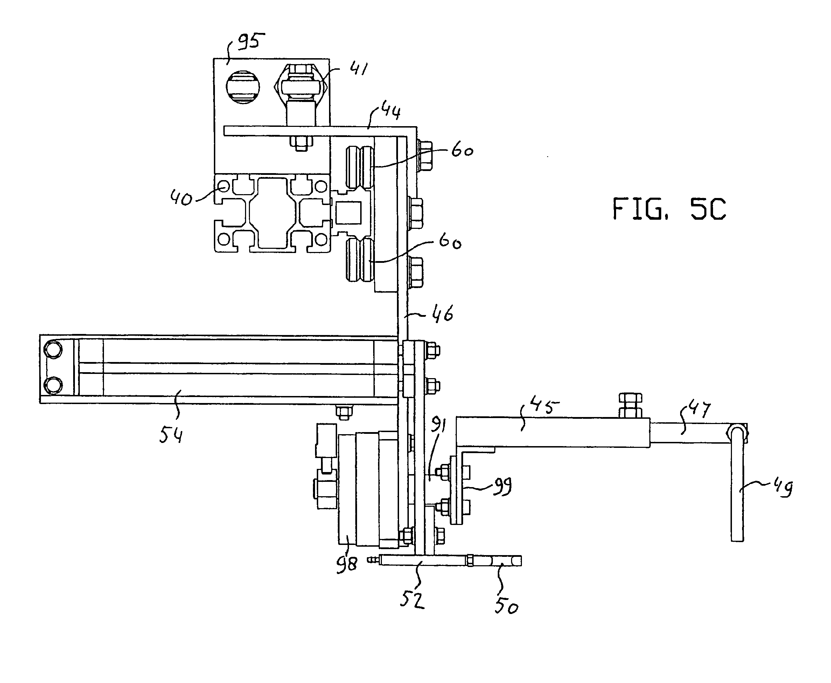

The transport forks 12 are rotatable over 180° in the direction D (see figure 4A), attached to the carrier 90. As a result the opening direction of the transport fork 12 can be changed from a position suitable for receiving a flower from the pick-up 6, to a position suitable for transferring a flower by a next unit, the transfer unit 8, shown in figures 5A-C.

The transferrer 8 shown in figures 5A-C each comprise a carrier 44, which at the location of 43 is attached to a piston rod 42 of a cylinder 41 which is permanently attached to a mounting plate 95. Mounting plate 95 is fixed to a rail 40, which continuously extends along the ends of the conveyors 7. The holder 44 is provided with wheels 60, for movement along the rail 40.

A plate 46 depends from the holder 44 to which plate by means of holder plate 96 a cylinder 54 is attached, to the piston rod 55 of which a plate 97 is attached. At the bottom of the plate 97 there is a fork 50, which is provided with an accommodation space which is oriented along with the direction of movement G (see figure 5A) of the conveyor 9. Of the conveyor 9 one fork 80 having opening 81, and being oriented to the ends of the conveyor 7, is schematically shown.

To the pending plate 46 as well a motor or rotating cylinder 98 is attached, the shaft 91 of which is attached to L-shaped plate 99, to which rod 45 and slide rod 47 are attached. The slide rod 47 can be adjusted in extension with respect to the rod 45 and can be secured in the wanted position. At the end the slide rod 47 is provided with a rod 48 extending transverse to it and in the direction G, which rod 48, as can be seen in figure 5B, is turned downward at an angle with inclined end 49. Because of the motor 98 the rod 48, 49 is tiltable (K) from a position in which the rod 49 extends horizontally into a position in which the end 49 extends vertically.

When the transport forks 12 on the conveyors 7 arrive at the location shown in figures 5A,B moving in the direction C, the rotation means on the carriers 90 are activated to swing the transport fork 12 in the direction D, over 180°. In the position then achieved the accommodation space 12a vertically coincides with the accommodation space 51 of the fork 50 of the transfer unit 13. The closing cylinder 12a is operated for opening the fork. When the sensor means that are not further shown establish that the transport forks 80 of the sorting conveyor 9 are free, the control unit of the apparatus 1 operates the motor 98 in order to tilt the rod 48 into the position in which the end 49 extends vertically and into the path of the transport forks 89, and by means of engagement therewith is guided along in the direction G. The cylinder 41 here runs free. Simultaneously the cylinder 54 is operated, to push the rod 55 out in the direction J, so that the fork 50 is urged towards the sorting conveyor 9, and because of the coinciding movement with the holder 44 the fork is moved in the direction F. In the end position the fork 50 is situated with accommodation space 51 exactly vertically in line with the accommodation space 81 of the transport fork 80. The closing cylinder 52 is then opened, so that the closing pin 53 is retracted. The transport forks 80 can move the flower further, without delay in the direction G, because the accommodation space 51 is open in transport direction.

After that the cylinders 41 and 54 are operated, as well as the motor 98, to urge the transfer unit 13 back again to the starting position.

Meanwhile the transport fork 12 is moved back again along the conveyor 7, to go through a next process.

## Claims

1. Apparatus for transferring singled flowers or plants from a collective container to a sorting machine, comprising means for serially picking up flowers kept closely together from the collective container, spreading means for separating the picked up flowers, means for transferring the separated flowers to a series of transfer conveyors substantially running in the same direction, which transfer conveyors are positioned for simultaneously transferring the series of flowers to a sorting conveyor, as well as comprising means for transferring the flowers from the respective conveyors to the sorting conveyor.

2. Apparatus according to claim 1, the transfer conveyors being positioned transverse to the sorting conveyor.

3. Apparatus according to claim 1 or 2, the transfer conveyors each being provided with a flower holder that is rotatable on the transfer conveyor from an accommodation position, oriented towards the pick-up means, to a discharge position for discharging the flower to the transfer means, the accommodation position and the discharge position preferably being at an angle to each other, preferably approximately 180 degrees, the angular displacement preferably taking place at the location of the transfer means.

4. Apparatus according to claim 3, in which the flowers are accommodated in the transfer means during the angular displacement.

5. Apparatus according to any one of the preceding claims, the transfer conveyors being parallel.

6. Apparatus according to any one of the preceding claims, the transfer means being arranged for movement along with the sorting conveyor, the transfer means preferably being arranged for simultaneous movement to the sorting conveyor.

7. Apparatus according to claim 6, the transfer means having a fork for accommodation of a flower stem, and being provided with means for closing or opening the accommodation space of the fork.

8. Apparatus according to claim 6 or 7, the sorting conveyor being provided with fork-shaped flower accommodation spaces that are moved according to a path, the transfer means furthermore being provided with carriers, for engaging and following the movement of the flower accommodation spaces during the transfer of the flowers, the carriers preferably being moveable between a position extending into the path of the flower accommodation spaces and a position free from it.

9. Apparatus according to any one of the preceding claims, the pick-up means being provided with closeable gripping arms and are moveable to and from the collective container, the flowers being kept in the collective container with their flowers supporting on a bearing surface, the gripping arms being moveable at a distance under the bearing surface into engagement with the stems, and the pick-up means furthermore being provided with means for lifting the flowers from the bearing surface, the pick-up means preferably each being provided with a cylinder for the reciprocal motion of the gripping arms to and from the collective container and/or to the transfer conveyors.

10. Apparatus according to any one of the preceding claims, the spreading means comprising rigid connections that connect the pick-up means to each other and are extendable and retractable, the connections preferably being cylinder assemblies, the cylinder assemblies preferably connecting consecutive pick-up means.

11. Apparatus according to any one of the preceding claims, the adjacent pick-up means being guided on different rails for the separating motion.

12. Apparatus according to any one of the claims 9-11, the pick-up means also forming the transfer means.

13. Apparatus according to any one of the preceding claims, the spreading means being active in a path parallel to the sorting conveyor.

14. Apparatus according to any one of the preceding claims, the collective container being placed adjacent to the transfer conveyors.

## Patentansprüche

1. Vorrichtung zum Übertragen von verenkelten Blumen oder Pflanzen von einem Sammelbehälter zu einer Sortiermaschine, umfassend Mittel zum seriell Aufnehmen von dicht nebeneinander gehaltenen Blumen vom Sammelbehälter, Spreizmittel zum Trennen der aufgenommenen Blumen, Mittel zum Übertragen der getrennten Blumen an eine Serie hauptsächlich in derselben Richtung gehender Übertragungsbeförderer, welche Übertragungsbeförderer aufgestellt sind zum simultan Übertragen der Serie Blumen an einen Sortierbeförderer, sowie umfassend Mittel zum Übertragen der Blumen von den jeweiligen Beförderern an den Sortierbeförderer.

2. Vorrichtung nach Anspruch 1, wobei die Übertragungsbeförderer quer auf dem Sortierbeförderer aufgestellt sind.

3. Vorrichtung nach Anspruch 1 oder 2, wobei die Übertragungsbeförderer jeder mit einem Blumenhalter versehen sind, der auf dem Übertragungsbeförderer drehbar ist von einem Aufnahmestand, auf die Aufnahmemittel gerichtet, zu einem Abgabestand für Abgabe der Blume an die Übertragungsmittel, wobei vorzugsweise der Aufnahmestand und der Abgabestand unter einem Winkel bezüglich einander stehen, vorzugsweise ungefähr 180 Grad, wobei die Winkelablenkung vorzugsweise an der Stelle der Übertragungsmittel stattfindet.

4. Vorrichtung nach Anspruch 3, wobei während der Winkelablenkung die Blumen in den Übertragungsmitteln aufgenommen werden.

5. Vorrichtung nach einem der vorhergehenden Ansprüche, wobei die Übertragungsförderer parallel sind.

6. Vorrichtung nach einem der vorhergehenden Ansprüche, wobei die Übertragungsmittel angeordnet sind für Bewegung mit dem Sortierbeförderer, wobei die Übertragungsmittel vorzugsweise für gleichzeitige Bewegung zu dem Sortierbeförderer angeordnet werden.

7. Vorrichtung nach Anspruch 6, wobei die Übertragungsmittel eine Gabel haben für Aufnahme eines Blumenstengels, und mit Mitteln zum Schließen oder Öffnen des Aufnahmeraums der Gabel versehen sind.

8. Vorrichtung nach Anspruch 6 oder 7, wobei der Sortierbeförderer mit gabelförmigen Blumenaufnahmeräumen versehen sind, die gemäß einer Bahn bewogen werden, wobei die Übertragungsmittel weiter mit Mitnehmern versehen sind zum Angreifen und Folgen einer Bewegung der Blumenaufnahmeräume während der Übertragung der Blumen, wobei die Mitnehmer vorzugsweise zwischen einem in die Bahn der Blumenaufnameräume reichenden Stand und einem Stand frei davon beweglich sind.

9. Vorrichtung nach einem der vorhergehenden Ansprüche, wobei die Aufnahmemittel mit schließbaren Greifarmen versehen sind und zum und vom Sammelhalter beweglich sind, wobei die Blumen mit ihren Blumen stützend auf einer Tragfläche im Sammelhalter gehalten werden, wobei die Greifarme auf Abstand unter der Tragfläche in Angriff mit den Stengeln beweglich sind, und die Aufnahmemittel weiter mit Mitteln zum von der Tragfläche Heben der Blumen vesehen sind, wobei die Aufnahmemittel vorzugsweise jedes mit einem Zylinder für die Hin- und Herbewegung der Greifarme zum und vom Sammelhalter und/oder zu den Übertragungsbeförderern versehen sind.

10. Vorrichtung nach einem der vorhergehenden Ansprüche, wobei die Spreizmittel steife Verbindungen umfassen, die die Aufnamemittel miteinander verbinden und die ausdehnbar und einziehbar sind, wobei die Verbindungen vorzugsweise Zylindersysteme sind, wobei vorzugsweise die Zylindersysteme aufeinanderfolgende Aufnahmemittel miteinander verbinden.

11. Vorrichtung nach einem der vorhergehenden Ansprüche, wobei die nebeneinander gelegenen Aufnahmemittel für die Trennungsbewegung auf verschiedenen Schienen geleitet sind.

12. Vorrichtung nach einem der Ansprüche 9-11, wobei die Aufnamemittel zugleich die Übertragungsmittel bilden.

13. Vorrichtung nach einem der vorhergehenden Ansprüche, wobei die Spreizmittel in einer Bahn parallel zu dem Sortierbeförderer wirksam sind.

14. Vorrichtung nach einem der vorhergehenden Ansprüche wobei der Sammelhalter neben den Übertragungsbeförderern angeordnet ist.

## Revendications

1. Appareil pour transférer des plantes ou des fleurs séparées par unités depuis un conteneur collectif vers une machine de triage, comprenant des moyens permettant de prélever en série des fleurs maintenues étroitement les unes contre les autres depuis le conteneur collectif, des moyens d'étalement permettant de séparer les fleurs prélevées, et des moyens de transfert des fleurs séparées vers une série de transporteurs de transfert s'étendant essentiellement dans la même direction, lesquels transporteurs de transfert sont disposés de manière à transférer simultanément les séries de fleurs vers un transporteur de triage, et comprenant également des moyens de transfert des fleurs depuis les transporteurs respectifs vers le transporteur de triage.

2. Appareil selon la revendication 1, dans lequel les transporteurs de transfert sont disposés transversalement par rapport au transporteur de triage.

3. Appareil selon la revendication 1 ou 2, dans lequel les transporteurs de transfert comportent chacun un support de fleur qui peut tourner sur le transporteur de transfert depuis une position de réception orientée vers les moyens de prélèvement, vers une position de déchargement afin de décharger la fleur vers les moyens de transfert, la position de réception et la position de déchargement se trouvant de préférence à un certain angle l'une par rapport à l'autre qui est de préférence de 180 degrés, et le déplacement angulaire se faisant de préférence à l'emplacement des moyens de transfert.

4. Appareil selon la revendication 3, dans lequel les fleurs sont reçues dans les moyens de transfert pendant le déplacement angulaire.

5. Appareil selon l'une quelconque des revendications précédentes, dans lequel les transporteurs de transfert sont parallèles.

6. Appareil selon l'une quelconque des revendications précédentes, dans lequel les moyens de transfert sont disposés de manière à se déplacer le long du transporteur de triage, les moyens de transfert étant de préférence disposés en vue d'un mouvement simultané avec le transporteur de triage.

7. Appareil selon la revendication 6, dans lequel les moyens de transfert comprennent une fourche pour recevoir une tige de fleur, et comprennent des moyens pour fermer ou ouvrir l'espace de réception de la fourche.

8. Appareil selon la revendication 6 ou 7, dans lequel le transporteur de triage comporte des espaces de réception de fleur en forme de fourche qui sont déplacés selon un certain trajet, les moyens de transfert comprenant en outre des supports pour entrer en contact et suivre le mouvement des espaces de réception de fleur pendant le transfert des fleurs, lesquels supports peuvent de préférence se déplacer entre une position s'étendant dans le trajet des espaces de réception de fleur et une position dégagée de celui-ci.

9. Appareil selon l'une quelconque des revendications précédentes, dans lequel les moyens de prélèvement comportent des bras de saisie refermables et peut se rapprocher ou s'éloigner du conteneur collectif, les fleurs étant maintenues dans le conteneur collectif en reposant sur une surface de support, les bras de saisie pouvant se déplacer sur une certaine distance sous la surface de support de manière à entrer en contact avec les tiges, et les moyens de prélèvement comportant en outre des moyens de soulèvement des fleurs de la surface de support, les moyens de prélèvement comportant de préférence chacun un cylindre en vue du mouvement de va-et-vient des bras de saisie depuis et vers le conteneur collectif et/ou les transporteurs de transfert.

10. Appareil selon l'une quelconque des revendications précédentes, dans lequel les moyens d'étalement comportent des connexions rigides qui connectent les moyens de prélèvement les uns aux autres et sont extensibles et rétractables, les connexions consistant de préférence en des systèmes de cylindres, et les systèmes de cylindres connectant de préférence des moyens de prélèvement consécutifs.

11. Appareil selon l'une quelconque des revendications précédentes, dans lequel les moyens de prélèvement adjacents sont guidés sur des rails différents en vue du mouvement de séparation.

12. Appareil selon l'une quelconque des revendications 9 à 11, dans lequel les moyens de prélèvement constituent également les moyens de transfert.

13. Appareil selon l'une quelconque des revendications précédentes, dans lequel les moyens d'étalement sont actifs dans un trajet parallèle au transporteur de triage.

14. Appareil selon l'une quelconque des revendications précédentes, dans lequel le conteneur collectif est disposé à proximité des transporteurs de transfert.
